# EUROPEAN PATENT APPLICATION

(11) **EP 0 838 160 A1**
(43) Date of publication of application: **29.04.1998**
(21) Application number: 97117498.2
(22) Date of filing: 09.10.1997
(51) Int. Cl.: A23K 1/16

(54) **The use of poly-gamma-glutamic acid for preparing an agent for increasing the phosphorus assimilation**

(30) Priority: 25.10.1996 JP 283648/96
(71) Applicant: Ajinomoto Co., Ltd., Tokyo (JP)
(72) Inventor: Tanimoto, Hiroyuki, c/o Ajinomoto Co., Inc., Kawasaki-ku, Kawasaki-shi, Kanagawa-ken (JP); Karasawa, Masahiko, c/o Ajinomoto Co., Inc., Kawasaki-ku, Kawasaki-shi, Kanagawa-ken (JP); Toride, Yasuhiko, Chuo-ku, Tokyo (JP)
(74) Representative: Strehl Schübel-Hopf & Partner

(57) **Abstract**

The invention provides the use of poly-γ-glutamic acid and/or its decomposition product(s) for preparing an agent for increasing the degree of phosphorus assimilation by animals and reducing the phosphorus content of the excretions from animals.

## Description

### Industrial Field of the Invention

The present invention relates to the production of an agent and to a feed composition capable of reducing the phosphorus content of the excretions from animals fed with the composition

### Prior Art

The excretions from farm animals contain a large amount of phosphorus not assimilated by the animals, which causes the problem of water pollution (eutrophication) in rivers, lakes and the sea.

In order to reduce the phosphorus content in the excretions from farm animals, the amount of phosphorus to be fed to the animals must be minimized and, in addition, the feed to be fed to farm animals must be so formulated that the degree of phosphorus assimilation by the animals is increased. For this purpose, phytase is added to feed, by which phytic acid in the feed that is hardly assimilated by animals is decomposed, to thereby increase the degree of phosphorus assimilation by animals as fed with the feed. However, phytase is problematic in that it is inactivated under heat, and therefore has no practical usefulness.

### Problems to be Solved by the Invention

The object of the invention is to provide an agent and a feed composition capable of reducing the phosphorus content of the excretions from farm animals fed with the composition.

### Means for Solving the Problems

The present inventors have assiduously studied in order to attain the object, and, as a result, have found that, when poly-γ-glutamic acid used to prepare an agent and is added to feed for farm animals and pets, the degree of phosphorus assimilation by those animals fed with the feed can be increased and the phosphorus content of the excretions from those animals fed with the feed can be reduced. On the basis of these findings, we have completed the invention.

Specifically, the invention provides the use of poly-γ-glutamic acid and/or its decomposition product(s) for preparing an agent for increasing the degree of phosphorus assimilation by animals and reducing the phosphorus content of the excretions from animals. According to this invention, the poly-γ-glutamic acid and/or its decomposition product(s) may be added to the animal feed to obtain a feed composition effective in reducing the phosphorus content of the excretions from the animals.

Poly-γ-glutamic acid for use in the invention may be prepared by extracting and purifying it from the mucilagenous material in *natto* (fermented soybeans), or by extracting and purifying poly-γ-glutamic acid as extracellularly secreted by microorganisms of Bacillus, such as Bacillus natto. The acid may be of high-purity, but is not always required to have high purity. It may contain any other substances, such as levan and the like which are in the mucilagenous material in *natto* or are secreted from cells of Bacillus natto, with no problem.

The average molecular weight of poly-γ-glutamic acid for use in the invention is not specifically defined. For example, the acid as separated from *natto* or cells of Bacillus natto may have an average molecular weight of from 1000 to 3,000,000, and its decomposate may have an average molecular weight of from 1000 to 1,000,000. Preferred herein is poly-γ-glutamic acid having an average molecular weight of from 10,000 to 1,000,000.

Poly-γ-glutamic acid generally exists in the form of its D-form and L-form, and it is said that the D/L ratio in the acid varies depending on the cells cultivated and also on the composition of the medium used for cultivating the cells. For example, it is disclosed in Japanese Patent Application Laid-Open No. 3-47087 that poly-γ-glutamic acid described therein is in the form of a mixture of its D-form and L-form in which the L-form accounts for 90 % or more. The D/L ratio in poly-γ-glutamic acid for use in the present invention is not specifically defined, and poly-γ-glutamic acid having any undefined D/L ratio is employable herein.

For producing poly-γ-glutamic acid having a predetermined molecular weight, there may be used any method of processing poly-γ-glutamic acid having a molecular weight larger than the predetermined one with an enzyme derived from bacteria or animal organs having the ability to decompose the acid or its γ-bonds to thereby lower the molecular weight of the acid, or any method of cultivating cells of Bacillus natto or the like to thereby make the cells secrete poly-γ-glutamic acid having the predetermined molecular weight, any of which does not have a negative influence on the poly-γ-glutamic acid produced.

Poly-γ-glutamic acid is generally used in the form of its sodium salt, but any other edible salt or even free poly-γ-glutamic acid is usable with no negative effect.

The inventors have further found that a feed composition comprising a liquid culture of cells of Bacillus such as Bacillus natto containing poly-γ-glutamic acid is better than a composition comprising pure poly-γ-glutamic acid as artificially prepared by extracting and purifying the acid from the culture, for example, in the manner mentioned above (that is, high-purity poly-γ-glutamic acid alone, or low-purity products derived from the culture comprising poly-γ-glutamic acid and impurities such as levan), and that the former is more effective than the latter in reducing the phosphorus content of the excretions from animals fed with it.

For example, it is possible to recover a high yield of poly-γ-glutamic acid along with the cells cultivated, for example, in the manner mentioned below, and the poly-γ-glutamic acid-containing cells can be directly added to feed. Briefly, poly-γ-glutamic acid in a culture is insolubilized along with the cells therein through a combination of isoelectric point precipitation and salting-out precipitation, without being separated from the cells through conventional alcohol precipitation, salting-out precipitation or membrane fractionation, and the acid is separated from the culture along with the cells, and dried. For this, for example, where an aqueous solution of poly-γ-glutamic acid containing cultivated cells and medium nutrients used, such as a culture of poly-γ-glutamic acid-producing cells, is processed to have its pH value adjusted to its isoelectric point (pH of from 1.5 to 3.5 or so), the aqueous solution shall have a viscosity of not larger than 300 centipoises (cps), to which is added sodium chloride in an amount of 10 g/dl whereby the solubility of poly-γ-glutamic acid in the solution is greatly lowered, thereby resulting in that 95 % or more poly-γ-glutamic acid is recovered along with the cells. The poly-γ-glutamic acid-containing cells can be easily separated from the solution through filtration or centrifugation, and the resulting solid may be dried directly or along with a filtration promoter added thereto. In that way a high yield of poly-γ-glutamic acid is obtained along with the cells, which may be added to feed.

Poly-γ-glutamic acid promotes the absorption of minerals (see Japanese Patent Application Laid-Open Nos. 3-30648, 5-316999), promotes the formation of bones and egg shells, and reduces body fat in stock farm products (animal meat, poultry meat), and, in addition, is effective in improving the yield of meat of farm animals. In particular, however, where the reduction in the phosphorus content of the excretions from animals, the reduction in the body fats in stock farm products and even the improvement in the yield of meat of farm animals are desired, the addition of the culture of cells of Bacillus containing poly-γ-glutamic acid directly to feed is preferred to the addition thereto of pure poly-γ-glutamic acid as artificially extracted and purified from the culture, since the culture is more effective than the pure acid.

The amount of poly-γ-glutamic acid to be added to feed may be about from 0.01 to 3 % by weight, preferably from about 0.01 to 1 % by weight. Similarly, the amount of the culture of cells of Bacillus or its dried product to be added may be from about 0.01 to 3 % by weight in terms of poly-γ-glutamic acid therein.

The invention applies to any feed for domestic animals such as cows, pigs, horses, etc., for poultry such as chickens, turkeys, quails, etc., fishes such as eels, sweet fishes, carp, etc., and for pets such as dogs, cats, tropical fishes, etc.

In the feed composition obtained according to the invention, the components other than poly-γ-glutamic acid may be any ordinary ones, which include, for example, proteins, carbohydrates, fats, minerals, vitamins, etc. For example, the calcium content of the feed my be from about 0.01 to 30 %, preferably from about 0.1 to 5 %; and the iron content thereof may be from about 0.001 to 1 %, preferably from about 0.005 to 0.05 %.

The feed composition of the invention may be produced in any ordinary manner. During the step of mixing feed components, poly-γ-glutamic acid, or a culture of cells of Bacillus, or its dried product may be mixed uniformly together with the other feed components, or may be separately added thereto and then uniformly mixed.

The feed composition obtained by the invention may be fed to animals in any ordinary manner.

### Production Example 1

### [Production of a Culture of Cells of Bacillus natto ]

Cells of Bacillus natto separated from commercially-available *natto* were cultivated in a 3-liter mini-jar charged with a medium (pH 6.0) comprising 0.3 % of malt extract, 0.3 % of yeast extract, 0.5 % of polypeptone and 1.0 % of glucose, at 32°C for 24 hours to prepare a seed culture. Next, 0.5 % of the resulting seed culture was implanted in a 500-liter jar charged with a medium (pH 6.4) comprising 7.5 % of glucose, 1.5 % of ammonium sulfate, 0.035 % of MgSO₄·7H₂O, 0.005 % of MnSO₄·nH₂O, 0.15 % of KH₂PO₄, 5.0 % of MSG and 1.0 % of NaCl, and cultivated therein at 37°C for 48 hours to obtain a main culture.

### Production Example 2

### [Production of Poly-γ-glutamic Acid]

The culture produced in Production Example 1 was made to have a pH of 2.0 with concentrated hydrochloric acid, and its supernatant was removed through centrifugation or by means of a filter press. NaCl was added to the residue to have a final concentration of 10 %, whereby poly-γ-glutamic acid was salted out. About 12 kg of the recovered, crude poly-γ-glutamic acid fraction was dissolved in 120 liters of a dilute aqueous solution of sodium hydroxide (pH 4.0), decolored, de-salted, and then neutralized with an aqueous solution of sodium hydroxide. Next, this was spray-dried to obtain 2.5 kg of poly-γ-glutamic acid (sodium salt). The average molecular weight of the thus-obtained poly-γ-glutamic acid was measured from its low-angle laser light scattering pattern (LALLS by Toso LS8000) to be 520,000.

### Production Example 3

### [Production of Low-molecular-weight Poly-γ-glutamic Acid]

Poly-γ-glutamic acid that had been prepared in Production Example 2 was dissolved to have a concentration of 2 mg/ml, adjusted to have a pH of 1 with hydrochloric acid added thereto, and then heated at 50°C for 30 minutes or at 70°C for 1 hour. After having been heated, this was neutralized with a solution of sodium hydroxide, de-salted, and then spray-dried. The average molecular weight of the thus-obtained poly-γ-glutamic acid was measured from its LALLS pattern to be 300,000 (50°C, 30 minutes) and 10,000 (70°C, 1 hour).

### Production Example 4

### [Production of Poly-γ-glutamic Acid-containing Cells]

Cells of Bacillus natto separated from commercially-available *natto* were cultivated in a 3-liter mini-jar charged with a medium (pH 6.0) comprising 0.3 % of malt extract, 0.3 % of yeast extract, 0.5 5 of polypeptone and 1.0 % of glucose, at 32°C for 24 hours to prepare a seed culture. Next, 0.5 % of the resulting seed culture was inoculated in a 500-liter jar charged with a medium (pH 6.5) comprising 10.0 % of glucose, 1.5 % of ammonium sulfate, 0.035 % of magnesium sulfate 7-hydrate, 0.005 % of manganese sulfate, 0.15 % of potassium hydrogenphosphate, 7.5 % of monosodium glutamate and 1.0 % of sodium chloride, and cultivated therein at 28°C for 96 hours. The poly-γ-glutamic acid content of the resulting culture was measured through GPC to be 2.2 g/dl.

500 ml of the culture was made to have a pH of 2.8 with concentrated hydrochloric acid added thereto, and sodium chloride was added thereto and stirred to have a sodium chloride concentration of 10 g/dl. After one full day, this was filtered, using a filter press, to isolate 90g of a solid of poly-γ-glutamic acid-containing cells. This solid had a water content of 70 %, while containing 11 g of poly-γ-glutamic acid and 7.5 g of the cells.

Since the poly-γ-glutamic acid-containing culture had a controlled pH of 2.8, its viscosity was very good with no handling problem.

52.5 g cellulose powder as a drying promoter was added to the culture, and the solid in the culture was pulverized. Then, the resulting culture was dried under reduced pressure, using a conical drier, to obtain 132 g of the intended, poly-γ-glutamic acid-containing cells.

The thus-obtained granular product of poly-γ-glutamic acid-containing cells had a poly-γ-glutamic acid content of 10.5 g (8 %), a water content of 62.5 g (47 %), a cell content of 7.0 g (5 %), and a cellulose content of 52 g (40 %). In this process, the recovery of poly-γ-glutamic acid was 95 %. Therefore, this process is effective in obtaining high γ-PGA feed.

Now, the invention is described in more detail with reference to the following Examples in which was used poly-γ-glutamic acid prepared in Production Examples 2, 3 and 4.

### Example 1

### [Effect in Feeding Chickens (broilers)]

One day-old broilers were grouped into plural cages each containing 10 broilers, and fed up to the age of 21 days. To the basal feed (Table 1) added was a varying amount of different polyglutamic acids as shown in Table 2. With any of the thus-prepared feed samples, 5 cage groups of broilers were fed. Each group had 2 replications.

The feces from those broilers being fed in each group was collected during a period from the age of 19 days to 21 days, and the phosphorus content of the feces was measured, from which was determined the rate of phosphorus utilization by the broilers in each group.

The data obtained are shown in Table 3, from which it is seen that the rate of phosphorus utilization by the broilers fed with polyglutamic acid-containing feed is increased while the phosphorus content of their feces is reduced.

**Table 1**

| Basal Feed | |
|---|---|
| Ingredients | % |
| Corn | 56.0 |
| Soybean Meal | 35.0 |
| Animal Fat | 5.0 |
| Salt | 0.45 |
| Calcium Carbonate | 1.5 |
| Calcium Secondary Phosphate | 1.5 |
| DL-methionine | 0.2 |
| Vitamin Premix | 0.25 |
| Mineral Premix | 0.1 |

**Table 2**

| | |
|---|---|
| Group 1 | Basal feed |
| Group 2 | Basal feed+Polyglutamic acid (Production Example 2) 0.1 % added |
| Group 3 | Basal feed + Polyglutamic acid (Production Example 2) 0.2 % added |
| Group 4 | Basal feed + Polyglutamic acid (Production Example 3) 0.1 % added |
| Group 5 | Basal feed + Polyglutamic acid (Production Example 4) 0.1 % added |

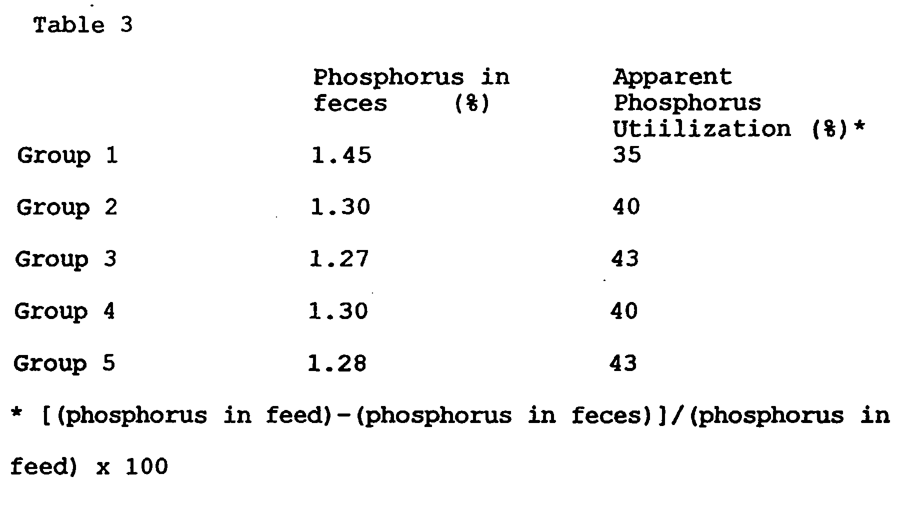

### Example 2

### [Effect in Feeding Pigs]

Landrace pigs (body weight: 60 to 70 kg) were individually fed, and the rate of phosphorus utilization by them and also the phosphorus content of their feces were measured. The composition of the basal feed used herein is shown in Table 4. The test pigs were grouped into three groups of 6 heads each, and were fed with the feed shown in Table 5.

The data obtained are shown in Table 6, from which it is seen that the rate of phosphorus utilization by the pigs fed with polyglutamic acid-containing feed is increased while the phosphorus content of their feces is reduced.

**Table 4**

| Basal Feed | |
|---|---|
| Ingredients | % |
| Corn | 85.4 |
| Soybean Meal | 12.5 |
| Calcium Carbonate | 0.8 |
| Calcium Secondary Phosphate | 0.8 |
| Vitamin Mineral Premix | 0.5 |

**Table 5**

| | |
|---|---|
| Group 1 | Basal feed |
| Group 2 | Basalfeed+Polyglutamic acid* 0.1 % added |
| Group 3 | Basalfeed+Polyglutamic acid* 0.2 % added |

| | |
|---|---|
| * Poly-γ-glutamic acid of Production Example 2. | |

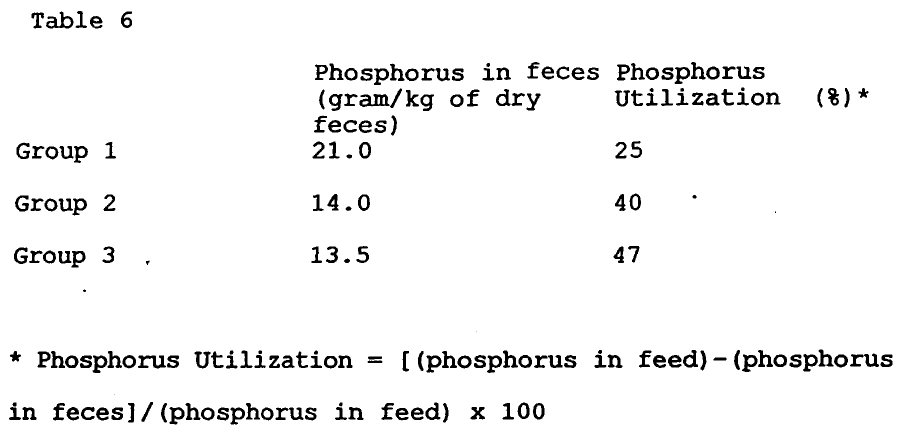

### Reference Example 1

Two groups of 7 days-old male broilers (50 heads each) were provided, and fed with the feed of Group 1 and that of Group 5 in Example 1 (to this, however, 0.2 % of poly-γ-glutamic acid was added), respectively, for 14 days. Then, both groups were fed with commercially-available feed (not containing poly-γ-glutamic acid) up to the age of 55 days. After the feeding test, the yield of meat of those broilers was separately measured in the two groups. The data obtained are shown in Table 7, from which it is seen that the yield of the meat of the broilers fed with the poly-(-glutamic acid-added feed is increased.

**Table 7**

| | Total Yield of Meat of Broilers (%) |
|---|---|
| Group 1 | 39.45 (100) |
| Group 5 | 40.65 (103)* |

| | |
|---|---|
| * Relative to the value of Group 1 (control) of 100. | |

## Claims

1. The use of poly-γ-glutamic acid and/or its decomposition product(s) for preparing an agent for increasing the degree of phosphorus assimilation by animals and reducing the phosphorus content of the excretions from animals.

2. The use according to claim 1, wherein poly-γ-glutamic acid and/or its decomposition product(s) is added to the animal feed.

3. The use according to claim 1 or 2, wherein poly-γ-glutamic acid and/or its decomposition product(s) is used in the form of a fermentation liquid of microorganisms of the genus Bacillus or in the form of the dried product from said liquid.

4. The use according to any of the claims 1 to 3, wherein poly-γ-glutamic acid and/or its decomposition product(s) is used in the form of a fermentation liquid obtained by a process comprising the fermentation of microorganisms of the genus Bacillus, thereafter adjusting the aqueous medium containing poly-γ-glutamic acid and the cells of the microorganism to a pH in the range of 1.5 to 3.5, adding sodium chloride thereto and separating the poly-γ-glutamic acid precipitated by salting-out together with the cells, and optionally drying.
